# EUROPÄISCHE PATENTANMELDUNG

(11) **EP 2 916 409 A2**
(43) Veröffentlichungstag der Anmeldung: **09.09.2015**
(21) Anmeldenummer: 15156718.7
(22) Anmeldetag: 26.02.2015
(51) Int. Cl.: H02G 3/22

(54) **Rahmen für Kabeldurchführungen, Befestigungselemente sowie Kabeldurchführungssystem**

(30) Priorität: 03.03.2014 DE 102014102790
(71) Anmelder: Murrelektronik GmbH, 71570 Oppenweiler (DE)
(72) Erfinder: Schuffenhauer, Andreas, 09113 Chemnitz (DE); Richter, Sebastian, 09366 Stollberg (DE)
(74) Vertreter: Prinz & Partner mbB

(57) **Zusammenfassung**

Die Erfindung betrifft einen Rahmen für Kabeldurchführungen (60) mit zwei Rahmenteilen (12, 14), einer Aufnahme (32) für Befestigungselemente (34; 34') und zwei Hebelsystemen (20), wobei die Rahmenteile (12, 14) Anlageflächen (30) aufweisen, die die Aufnahme (32) begrenzen, wobei jedes Hebelsystem (20) an einem Ende eines Rahmenteils (12, 14) angeordnet ist und jeweils einen Betätigungshebel (22) und einen Spannhebel (24) aufweist, die miteinander schwenkbar verbunden sind, wobei der Betätigungshebel (22) am Rahmenteil (12, 14) schwenkbar befestigt ist und der Spannhebel (24) in eine Spannfläche (28) des jeweils anderen Rahmenteils (14, 12) eingreifen kann, um die Rahmenteile (12, 14) miteinander lösbar verbinden zu können. Die Erfindung betrifft auch ein Befestigungselement für einen Rahmen (10) für Kabeldurchführungen (60), mit Grundflächen (38; 38') und Seitenflächen (40), wobei an wenigstens einer Seitenfläche (40) ein Vorsprung (42; 42') angeordnet ist und an einer nicht notwendigerweise gleichen Seitenfläche (40) eine Ausnehmung (44, 44') vorgesehen ist, in die der Vorsprung (42, 42') eines anderen Befestigungselements (34, 34') eingreifen kann, um die beiden Befestigungselemente (34; 34') aneinander zu befestigen, dadurch gekennzeichnet, dass der Querschnitt des Vorsprungs (42) einen Hinterschnitt (50) aufweist, in den der Rand der Ausnehmung (44) eines anderen Befestigungselements (34; 34') eingreifen kann. Die Erfindung betrifft schließlich ein Kabeldurchführungssystem mit einem solchen Rahmen und mehreren Befestigungselementen.

## Beschreibung

Die Erfindung betrifft einen Rahmen für Kabeldurchführungen, Befestigungselemente sowie ein Kabeldurchführungssystem.

Kabeldurchführungssysteme dienen der sicheren Durchführung von Kabeln durch Wände von Gehäusen oder Schaltschränken. Um einer flexiblen Verwendung gerecht zu werden und nachträgliche Veränderungen an der Kabeldurchführung vornehmen zu können, sind modulare Kabeldurchführungen bekannt, bei denen verschiedene Kabeltüllen in einen auswechselbar Rahmen eingespannt werden können. Hierbei werden die Kabeltüllen in einen Rahmen eingeführt, der anschließend geschlossen wird.

Bekannte modulare Kabeldurchführungssysteme sind aufwendig und schwierig zu komplettieren und zu montieren.

Es ist Aufgabe der Erfindung, ein modulares Kabeldurchführungssystem bereitzustellen, das auf einfache Weise die einzelnen Befestigungselemente derart aneinander befestigt, dass sich diese leicht und sicher montieren, demontieren und austauschen lassen..

Die Aufgabe wird gelöst durch einen Rahmen für Kabeldurchführungen, mit zwei Rahmenteilen, einer Aufnahme für Befestigungselemente und zwei Hebelsystemen, wobei die Rahmenteile Anlageflächen aufweisen, die die Aufnahme begrenzen, wobei jedes Hebelsystem an einem Ende eines Rahmenteils angeordnet ist und jeweils einen Betätigungshebel und einen Spannhebel aufweist, die miteinander schwenkbar verbunden sind, wobei der Betätigungshebel am Rahmenteil schwenkbar befestigt ist und der Spannhebel in eine Spannfläche des jeweils anderen Rahmenteils eingreifen kann, um die Rahmenteile miteinander lösbar verbinden zu können. Durch die Hebelsysteme des Rahmens ist es möglich, die in der Aufnahme des Rahmens angeordneten Befestigungselemente auf einfache Weise gegeneinander zu verspannen. Durch den Anpressdruck der Befestigungselemente untereinander dichten sich diese gegeneinander ab, sodass die gesamte Kabeldurchführung ein Eindringen von Luft und somit Feuchtigkeit verhindert.

Vorzugsweise weist das Hebelsystem einen Totpunkt auf, der beim Verbinden und Lösen der beiden Rahmenteile überwunden werden muss, sodass der Rahmen gegen unbeabsichtigtes Öffnen geschützt ist, da zur Überwindung des Totpunktes Kraft aufgewendet werden muss.

Beispielsweise weist jedes der beiden Rahmenteile eines der Hebelsysteme auf, wodurch die Mechanik der Hebelsysteme vereinfacht wird.

In einer Ausführungsvariante sind die Rahmenteile L-förmig ausgeführt. Dadurch ist ein rechteckiger Rahmen einfach zu realisieren.

Vorzugsweise sind die Hebelsysteme am kurzen Schenkel des jeweiligen Rahmenteils angeordnet. Auf diese Weise kann das Hebelsystem selbst sehr kurz ausgeführt sein.

Die Spannflächen können am langen Schenkel, insbesondere am Ende des langen Schenkels, der Rahmenteile vorgesehen sein, sodass die Spannhebel einfach in die Spannflächen eingreifen können.

In einer Ausführungsvariante der Erfindung bildet der Rahmen ein Rechteck, wenn sich der Rahmen in der vollständig geschlossen Stellung befindet. Auf diese Weise ist eine einfache Montage des Rahmens möglich.

Beispielsweise sind die Rahmenteile mehrstückig ausgeführt, sodass die Größe des Rahmens durch Einfügen weiterer Teile vergrößert werden kann.

In einer Ausführungsform der Erfindung sind die Rahmenteile identisch, wodurch die Herstellungskosten des Rahmens gesenkt werden können.

Der Verbindungshebel kann eine Öse und das Rahmenteil kann ein Loch aufweisen, wobei die Öse mit dem Loch fluchtet, wenn der Rahmen vollständig geschlossen ist. Dadurch ist es möglich, beispielsweise durch einen Stift oder eine Schraube, das Hebelsystem gegen unbeabsichtigtes Öffnen zu sichern.

In einer Ausgestaltung der Erfindung ist das Hebelsystem derart ausgebildet, dass bei Betätigung des Betätigungshebels die beiden Rahmenteile aufeinander zu bewegt werden, wobei die Bewegungsrichtung der Rahmenteile schräg zu den Anlageflächen der Rahmenteile gerichtet ist. Auf diese Weise werden beim Schließen des Rahmens die Befestigungselemente sowohl in Längsrichtung des Rahmens als auch in Querrichtung des Rahmens an die angrenzenden Befestigungselemente gepresst, wodurch eine stark verbesserte Abdichtung der Kabeldurchführung ermöglicht wird. In diesem Zusammenhang ist unter "schräg" weder senkrecht noch parallel zu den von dem Rahmenschenkel definierten Richtungen zu verstehen.

Die Aufgabe wird ferner durch ein Befestigungselement für einen Rahmen für Kabeldurchführungen gelöst, insbesondere für den bereits beschriebenen Rahmen, mit Grundflächen und Seitenflächen, wobei an wenigstens einer Seitenfläche ein Vorsprung angeordnet ist und an einer nicht notwendigerweise gleichen Seitenfläche eine Ausnehmung vorgesehen ist, in die der Vorsprung eines anderen Befestigungselements eingreifen kann, um die beiden Befestigungselemente aneinander zu befestigen, wobei der Querschnitt des Vorsprungs einen Hinterschnitt aufweist, in den der Rand der Ausnehmung eines anderen Befestigungselements eingreifen kann. Durch die Vorsprünge und Ausnehmungen ist es möglich, dass die Befestigungselemente sicher und dicht miteinander verbunden werden können, ohne dass sie dazu in einen Rahmen eingespannt werden müssen. Die Möglichkeit, die Befestigungselemente vor dem Einsetzen in den Rahmen miteinander zu verbinden, vereinfacht die Montage des Rahmens erheblich. Durch den Hinterschnitt ist eine einfache Rastverbindung zwischen den Befestigungselementen ausgebildet.

Vorzugsweise sind der Rand der Ausnehmung und/oder der Vorsprung aus einem elastischen Material, um ein einfaches Einrasten und Lösen zu ermöglichen.

In einer Ausführungsvariante ist der Vorsprung als Haken und die Ausnehmung als länglicher Schlitz ausgeführt, wobei die Ausnehmung wenigstens zwei Abschnitte mit unterschiedlicher Breite aufweist, wobei der Haken im Abschnitt mit kleinster Breite breiter als die Ausnehmung ist und der Haken im Abschnitt mit größter Breite nicht so breit wie die Ausnehmung ist. Auf diese Weise können die Befestigungselemente durch Einführen der Haken in die Ausnehmungen in Abschnitten mit größter Breite eingeführt und anschließend durch ein Verschieben der Befestigungselemente relativ zueinander entlang der Ausdehnungsrichtung der Ausnehmung verriegelt werden, solange sich die Haken in den Abschnitten der Ausnehmungen mit kleiner Breite befinden. Auf diese Weise ist eine einfache, jedoch sichere Verbindung der Befestigungselemente untereinander möglich.

Vorzugsweise sind an jeder Seitenfläche wenigstens eine Ausnehmung und wenigstens ein Vorsprung vorgesehen, sodass die Befestigungselemente in beliebiger Orientierung miteinander verbunden werden können.

Beispielsweise ist das Befestigungselement eine Kabeltülle, ein Stecker, eine Kupplung und/oder ein Adapter, insbesondere ein M12-M8 Adapter. Insbesondere durch die Verwendung von Adaptern, aber auch von Steckern und Kupplungen ist es möglich, besonders flexible und dichte Kabeldurchführungen bereitzustellen, an denen Leitungen ohne größere Mühe befestigt und entfernt werden können.

In einer Ausgestaltung der Erfindung ist der Stecker und/oder die Kupplung über ein Mitnahmeprofil, insbesondere ein Sechskant, in den Grundflächen aufgenommen, wodurch sich der Stecker und/oder die Kupplung in definierten Schritten verdrehen lassen. Auf diese Weise kann das Steckbild verändert werden.

In einer Ausführungsvariante sind die Größe des Vorsprungs und die der Ausnehmung sowie der Abstand zwischen Vorsprung und Ausnehmung unabhängig von der Größe der Grundfläche gewählt, sodass Befestigungselemente mit verschiedenen Grundflächen aneinander befestigbar sind. Auf diese Weise lassen sich Kabeldurchführungen mit verschieden großen Befestigungselementen für Kabel verschiedener Dicken einfach realisieren.

Die Erfindung wird ferner durch ein Kabeldurchführungssystem mit einem Rahmen und mehreren Befestigungselementen gelöst, die in der Aufnahme des Rahmens angeordnet sind, wobei die Anlageflächen Vorsprünge und/oder Ausnehmungen aufweisen, die den Vorsprüngen und Ausnehmungen der Befestigungsmittel entsprechen, sodass die Befestigungselemente mit den Rahmenteilen verbindbar sind und bei Betätigung des Hebelsystems im Rahmen fixiert bzw. gelöst werden. Durch die Möglichkeit der Verbindung der Befestigungselemente mit dem Rahmen wird die Montage des Kabeldurchführungssystems stark vereinfacht, da ein Verkanten oder eine Fehlanordnung der Befestigungselemente verhindert wird.

Vorzugsweise sind die Befestigungselemente einzeln oder zusammen gegenüber dem Rahmen in der Ebene des Rahmens verschiebbar, wenn sich der Rahmen in einer halb-geschlossenen Stellung befindet, wodurch das Verschließen des Rahmens vereinfacht wird. Dabei sind die Befestigungselemente sowohl entlang der Längsrichtung als auch der Querrichtung des Rahmens verschiebbar und nicht lediglich nur entlang einer der Richtungen des Rahmens.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 einen erfindungsgemäßen Rahmen in geöffneter Stellung in Draufsicht,
- Figur 2 ein erfindungsgemäßes Befestigungselement in perspektivischer Ansicht,
- Figur 3a das Befestigungselement nach Figur 2 in Seitenansicht,
- Figur 3b das Befestigungselement nach Figur 2 in Frontansicht,
- Figur 4a mehrere unverbunden erfindungsgemäße Befestigungselemente in perspektivischer Ansicht,
- Figur 4b die Befestigungselemente nach Figur 4a in perspektivischer Ansicht miteinander verbunden,
- die Figuren 5a bis 5d ein erfindungsgemäßes Kabeldurchführungssystem mit dem Rahmen nach Figur 1 und den Befestigungselementen nach Figur 4b in verschiedenen Stellungen während des Schließens des Rahmens,
- Figur 6a einen Ausschnitt einer zweiten Ausführungsform eines erfindungsgemäßen Befestigungselementes in Frontansicht,
- Figur 6b das Befestigungselement nach Figur 6a in Seitenansicht, und
- Figur 7 eine weitere Ausführungsform eines erfindungsgemäßen Rahmens in Draufsicht.

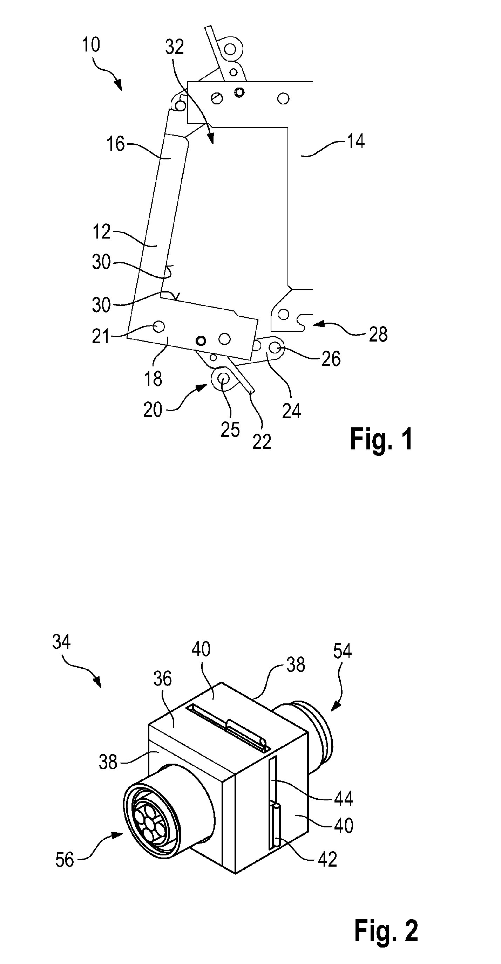

In Figur 1 ist ein Rahmen 10 dargestellt, der zwei Rahmenteile 12, 14 aufweist.

In der gezeigten Ausführungsform sind die beiden Rahmenteile 12, 14 identisch, sodass zur Vereinfachung lediglich das Rahmenteil 12 beschrieben wird. Selbstverständlich ist es denkbar, dass die Rahmenteile 12, 14 nicht identisch ausgeführt sind.

Das Rahmenteil 12 ist L-förmig ausgeführt und hat somit einen langen Schenkel 16 und einen kurzen Schenkel 18, die zueinander im rechten Winkel angeordnet sind.

Am kurzen Schenkel 18 sind ein Hebelsystem 20 und ein Loch 21 vorgesehen, dass sich durch das Rahmenteil 12 erstreckt.

Das Hebelsystem 20 weist einen Betätigungshebel 22 und einen Spannhebel 24 auf.

Der Betätigungshebel 22 ist am kurzen Schenkel 18 des Rahmenteils 14 schwenkbar angeordnet. Im mittleren Abschnitt des Betätigungshebels 22 ist der Spannhebel 24 mit einem Ende mittels einer Gelenkachse schwenkbar angebracht. Die Gelenkachse teilt den Betätigungshebel 22 in zwei Teile.

Zudem weist der Betätigungshebel 22 eine Öse 25 auf, die beispielsweise auf dem vom Rahmenteil 12 weiter entfernten Teil des Betätigungshebels 22 angeordnet ist.

Die Öse 25 ist am Betätigungshebel 22 derart angeordnet, dass die Öse 25 mit dem Loch 21 fluchtet, wenn der Rahmen 10 vollständig geschlossen ist.

Der Spannhebel 24 ist beispielsweise länglich und aus einem Flachmaterial hergestellt, sodass er eine Ebene definiert.

An dem Ende des Spannhebels 24, der nicht mit dem Betätigungshebel 22 verbunden ist, ist ein Spannelement 26, beispielsweise in Form eines Stiftes, ausgebildet.

Am langen Schenkel 16 des Rahmenteils 12 ist eine Spannfläche 28 vorgesehen, in die das Spannelement 26 des Rahmenteils 14 eingreifen kann. In der gezeigten Ausführungsform ist die Spannfläche 28 als Haken ausgebildet, in die das als Stift ausgebildete Spannelement 26 eingreifen kann.

Selbstverständlich ist es denkbar, dass die Spannfläche 28 am Spannhebel 24 vorgesehen ist und das Spannelement 26 entsprechend am langen Schenkel 16 des Rahmenteils 14.

An den Innenseiten der Schenkel 16, 18, das heißt den Seiten der Schenkel 16, 18, die dem jeweiligen anderen Schenkel 18, 16 zugewandt sind, ist eine Anlagefläche 30 ausgebildet. Die Anlageflächen 30 begrenzen eine Aufnahme 32 im Rahmen 10, in der Befestigungselemente 34 (Figur 2) angeordnet und fixiert werden können.

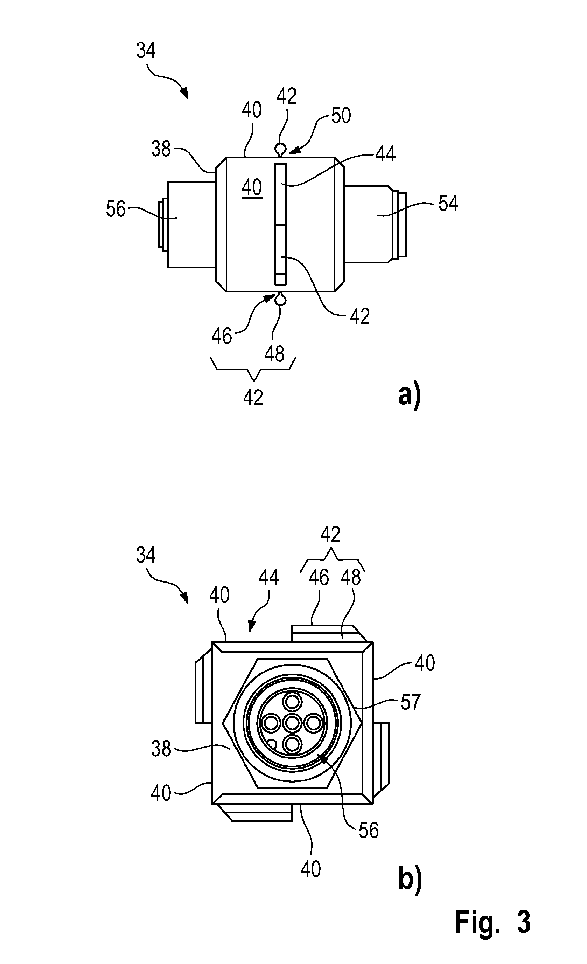

In Figur 2 ist ein Befestigungselement 34 perspektivisch dargestellt. Die Figuren 3a und 3b zeigen eine Seiten- bzw. Frontansicht des Befestigungselements 34.

Das Befestigungselement 34 weist einen quaderförmigen Grundkörper 36 auf, der zwei Grundflächen 38 und vier Seitenflächen 40 hat. An den Seitenflächen 40 sind Vorsprünge 42 und Ausnehmungen 44 vorgesehen, um mehrere Befestigungselemente 34 miteinander verbinden zu können.

Der Grundkörper 36 kann hohl oder als Vollmaterial ausgeführt sein. Entsprechend ist die Ausnehmung 44 eine Öffnung oder eine Vertiefung.

An wenigstens einer Seitenfläche 40 ist ein Vorsprung 42 angeordnet. Wie in Figur 3a gut zu erkennen, weist der Vorsprung 42 einen Steg 46 auf, an dem ein Abschnitt 48 anschließt. Der Abschnitt 48 ist wiederum breiter als der Steg 46, sodass ein Hinterschnitt 50 gebildet wird.

Der Abschnitt 48 kann beispielsweise rund ausgeführt sein.

Wie in Figur 3b zu erkennen, erstreckt sich der Vorsprung 42 parallel zu den Grundflächen 38. In der gezeigten Ausführungsform erstreckt er sich über die halbe Breite des Befestigungselements 34.

Weiterhin ist an wenigstens einer Seitenfläche 40 des Befestigungselements 34 eine der Ausnehmungen 44 vorgesehen.

Die Ausnehmung 44 kann ebenfalls länglich ausgeführt sein. Die Größe und Form der Ausnehmung 44 entspricht dabei im Wesentlichen der Größe und der Form des Vorsprungs 42, jedoch ist die Ausnehmung 44 etwas schmaler als die Breite des Abschnitts 48 ausgeführt.

Die Ränder der Ausnehmung 44 sind derart ausgebildet, dass sie in den Hinterschnitt 50 des Vorsprungs 42 eingreifen können und erstrecken sich parallel zum Steg 46, wenn der Vorsprung 42 in der Ausnehmung 44 aufgenommen ist.

Damit der Vorsprung 42 in die Ausnehmung 44 eingeführt werden kann, ist der Rand der Ausnehmung 44 und/oder der Abschnitt 48 elastisch ausgebildet, insbesondere aus einem elastischen Material gefertigt. Somit können zwei Befestigungselemente 34 miteinander verbunden werden, indem der Vorsprung 42 eines der Befestigungselemente 34 in die Ausnehmung 44 eines anderen Befestigungselementes 34 eingeführt wird und der Rand der Ausnehmung 44 in den Hinterschnitt 50 greift.

Beispielsweise sind pro Seitenfläche 40 je ein Vorsprung 42 und eine Ausnehmung 44 vorgesehen, die sich abwechseln, würde man die Seitenflächen 40 abwickeln.

Die Durchführung der Kabel bzw. der Leitungen durch den Grundkörper 36 erfolgt durch die Grundflächen 38 hindurch.

Die Grundflächen 38 sind vorzugsweise quadratisch und je nach Funktion des Befestigungselements unterschiedlich ausgeführt.

In den Figuren 2, 3a und 3b ist das Befestigungselement 34 als Adapter ausgeführt. Hierzu ist an einer der Grundflächen 38 ein Stecker 54, beispielsweise ein M12- oder M8-Stecker, angeordnet und an der anderen Grundfläche die zum Stecker 54 komplementäre Kupplung 56. Der Stecker 54 ist mit der Kupplung 56 durch elektrische Leitungen (nicht gezeigt) durch den Grundkörper 36 verbunden.

Der Stecker 54 und die Kupplung 56 sind über ein Mitnahmeprofil 57, beispielsweise ein Sechskant, in den Grundflächen 38 aufgenommen. So können der Stecker 54 und die Kupplung 56 in definierten Schritten gegenüber den Grundflächen verdreht werden. Denkbar sind selbstverständlich auch andere Mitnahmeprofile wie ein Vier- oder Achtkant, wodurch andere Schrittwinkel ermöglicht werden.

Denkbar ist selbstverständlich auch, dass der Stecker 54 und die Kupplung 56 unterschiedlichen Typs sind, sodass mithilfe des Befestigungselements ein Wechsel des Kabel- bzw. Abschlusstyps möglich ist. Vorzugsweise ist der Stecker 54 oder die Kupplung 56 vom Typ M12 und der jeweilige andere vom Typ M8, sodass ein M12-M8-Adapter realisiert ist.

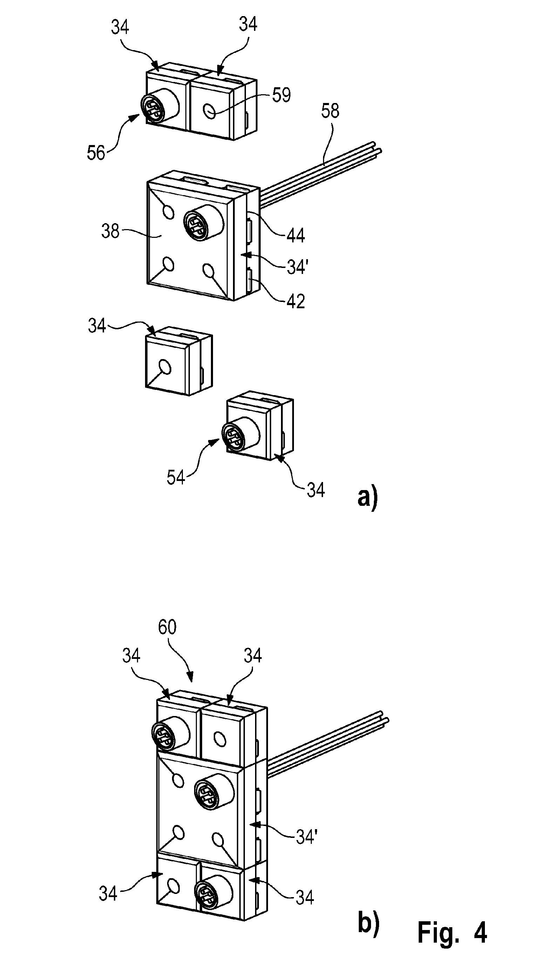

Auch sind weitere Typen von Befestigungselementen 34 denkbar. So kann das Befestigungselement 34 auch als Stecker bzw. Kupplung ausgeführt sein (vgl. Figur 4), bei dem an einer Grundfläche 38 ein Stecker oder eine Kupplung vorgesehen ist, die mit einem Kabel 58, das aus der anderen Grundfläche 38 herausragt, durch Leiter im Grundkörper 36 verbunden sind.

Ebenso kann das Befestigungselement 34 als einfache Kabeltülle ausgeführt sein, indem von der einen Grundfläche 38 zur anderen Grundfläche 38 ein Durchbruch 59 durch den Grundkörper 36 vorgesehen ist (vgl. Figur 4).

In Figur 4a sind mehrere verschiedene Befestigungselemente 34 dargestellt, die miteinander verbunden werden können.

Neben den Befestigungselementen 34 gemäß der Ausführungsform der Figuren 2 und 3a, 3b ist in Figur 4a auch ein Befestigungselement 34' in einer zweiten Ausführungsform dargestellt.

Das Befestigungselement 34' weist eine größere Grundfläche 38' auf, die in etwa dem Vierfachen der Grundfläche 38 der Befestigungselemente 34 entspricht.

Entsprechend sind im Befestigungselement 34' vier Durchbrüche, Stecker, Kupplungen und/oder Adapter vorgesehen.

An den Seitenflächen 40 sind ebenfalls Vorsprünge 42 und Ausnehmungen 44 vorgesehen, die denen des Befestigungselements 34 der ersten Ausführungsform entsprechen.

Bei allen Ausführungsformen des Befestigungselements 34 ist die Größe der Vorsprünge 42 und die der Ausnehmungen 44 sowie der Abstand zwischen den Vorsprüngen 42 und der Ausnehmungen 44 unabhängig von der Größe der Grundfläche 38, 38', sodass auch Befestigungselemente 34, 34' mit verschiedenen Grundflächen 38, 38' aneinander befestigbar sind.

In Figur 4b sind die Befestigungselemente 34, 34' der Figur 4a nun aneinander befestigt und bilden eine Kabeldurchführung 60 für acht Kabel bzw. Leitungen. Streng genommen handelt es sich nicht um eine reine Kabeldurchführung, da durch die Adapter oder Stecker Kabel lediglich an die Kabeldurchführung 60 angeschlossen werden. Der Einfachheit halber wird trotzdem der Begriff "Kabeldurchführung" verwandt.

Aufgrund der Verbindung der Vorsprünge 42 mit den Ausnehmungen 44 halten die Befestigungselemente 34, 34' aneinander, ohne in einen Rahmen 10 eingespannt zu sein.

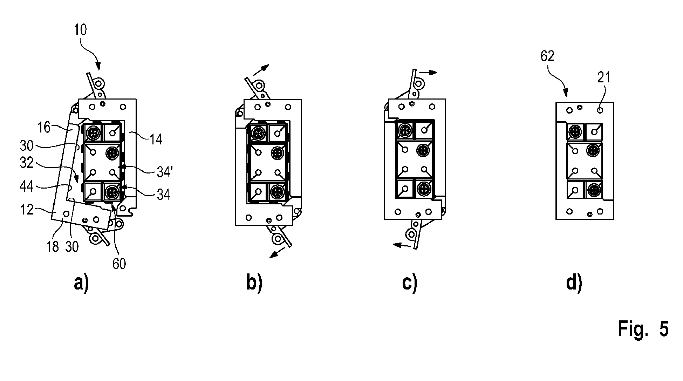

In den Figuren 5a bis 5d ist ein Kabeldurchführungssystem 62 aus einem Rahmen 10 und einer Kabeldurchführung 60 dargestellt.

Dabei ist die Kabeldurchführung 60 in der Aufnahme 32 des Rahmens 10 angeordnet.

Zur Verbindung der einzelnen Befestigungselemente 34, 34' mit den Rahmenteilen 12, 14 sind die Anlageflächen 30 der Rahmenteile 12, 14 ebenfalls mit Ausnehmungen 44 ausgebildet, die die Vorsprünge 42 der Befestigungselemente 34, 34' aufnehmen können.

Denkbar ist weiterhin, dass die Anlageflächen 30 auch mit Vorsprüngen 42 versehen sind, um den Sitz der Befestigungselemente 34, 34' im Rahmen 10 weiter zu verbessern.

Das Verbinden der beiden Rahmenteile 12, 14 und somit das Schließen des Rahmens 10 und Fixieren der Befestigungselemente 34, 34' erfolgt wie folgt.

Zunächst wird, nachdem die Befestigungselemente 34, 34' zur Kabeldurchführung 60 zusammengesteckt wurde, die Kabeldurchführung 60 in der Aufnahme 32 zwischen den beiden Rahmenteilen 12, 14 angeordnet.

Daraufhin werden die Spannelemente 26 der Spannhebel 24 der Rahmenteile 12, 14 mit den Spannflächen 28 des jeweils anderen Rahmenteils 14, 12 in Eingriff gebracht, sodass die Kabeldurchführung 60 nun vollständig von den Rahmenteilen 12, 14 umgeben ist (vgl. Figur 5b).

In dieser Stellung des Hebelsystems 20 liegt das Spannelement 26 des Spannhebels 24 näher an der Ebene, die durch die Anlagefläche 30 des kurzen Schenkels 18 gebildet wird, als an einer dazu parallelen Ebene, in der der Verbindungspunkt zwischen dem Rahmenteil 12, 14 und dem Betätigungshebel 22 liegt.

Zum Schließen bzw. vollständigen Verbinden des Rahmens 10 werden nun die beiden Betätigungshebel 22 mit einer Kraft beaufschlagt, sodass der Betätigungshebel 22 im Uhrzeigersinn, in Bezug auf die Darstellung der Figuren 5a bis 5d, bewegt wird. Die Richtung der Kraft ist in den Figuren 5b und 5c durch Pfeile angedeutet.

Durch die Betätigung des Betätigungshebels 22 wird auch der Spannhebel 24 bewegt, wodurch die beiden Rahmenteile 12, 14 aufeinander zu gezogen werden. Die Bewegung der beiden Rahmenteile erfolgt dabei schräg in Bezug auf die Anlageflächen 30 der beiden Schenkel 16, 18.

Dadurch werden die Befestigungselemente 34, 34' derart gegeneinandergepresst, dass sie sowohl gegen die angrenzenden Befestigungselemente 34, 34' in Richtung der langen Schenkel 16 der Rahmenteile 12, 14 als auch gegen die angrenzenden Befestigungselemente 34 in Richtung des kurzen Schenkels 18 der Rahmenteile 12, 14 abgedichtet werden.

Auf diese Weise wird gewährleistet, dass die Kabeldurchführung 60 dicht ist und durch sie keine Feuchtigkeit dringen kann.

Darüber hinaus sind, wie in den Figuren 5b und 5c dargestellt, die Befestigungselemente 34 bzw. die Kabeldurchführung 60 als Ganzes gegenüber dem Rahmen 10 in der Ebene des Rahmens verschiebbar, solange der Rahmen nicht vollständig geschlossen ist, sondern sich in einer halb-geschlossenen Stellung befindet.

Beispielsweis sind die Stellung nach den Figuren 5b und 5c halbgeschlossene Stellungen.

Zudem sind die Hebelsysteme 20 derart ausgebildet, dass sie einen Totpunkt aufweisen, der überwunden werden muss, um die Rahmenteile 12, 14 vollständig miteinander zu verbinden.

Dieser Totpunkt liegt in der gezeigten Ausführungsform zwischen den Stellungen der Figur 5c und 5d.

Das Überschreiten des Totpunktes beim Schließen des Rahmens 10 führt dazu, dass der Betätigungshebel 22 in die Stellung der Figur 5d schnellt.

Die Befestigungselemente 34, 34' sind nun derart miteinander verspannt, dass sie die Kabeldurchführung 60 nahezu luftdicht abschließen.

In der Stellung der Figur 5d ist der Rahmen 10 vollständig geschlossen bzw. die Rahmenteile 12, 14 vollständig miteinander verbunden.

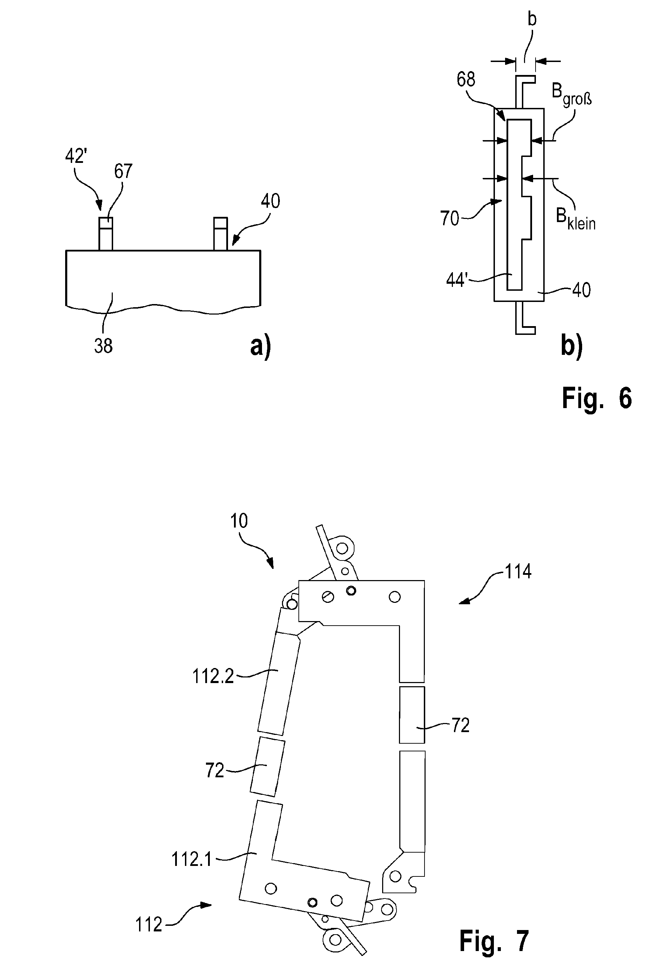

In den Figuren 6a und 6b ist eine weitere Ausführungsform eines Befestigungselements 34 gezeigt. In dieser Ausführungsform sind die Vorsprünge 42' und Ausnehmungen 44' von denen der vorher dargestellten Ausführungsformen unterschiedlich.

Die Vorsprünge 42' sind in dieser Ausführungsform schmal ausgeführt und weisen an ihren den Seitenflächen 40 abgewandten Enden Haken 67 auf. Die Ausnehmungen 44' sind als länglicher Schlitz ausgebildet.

Die Ausnehmung 44' weist wenigstens zwei Abschnitte 68, 70 mit verschiedenen Breiten Bₖₗₑᵢₙ, B_{groß} auf. Dabei ist die Ausnehmung 44' in dem Abschnitt 68 mit weitester Breite B_{groß} größer als die Breite b des Hakens 67, sodass der Haken 67 in die Ausnehmung 44' eingeführt werden kann. In den Abschnitten 70 mit geringerer Breite Bₖₗₑᵢₙ weist die Ausnehmung 44' eine Breite Bₖₗₑᵢₙ auf, die schmaler ist als die Breite b des Hakens 67.

Es können an einer Seitenfläche 40 auch zwei Vorsprünge 42' vorgesehen sein. In diesem Fall weist die Ausnehmung 44' je zwei Abschnitte 68 mit größter und zwei Abschnitte 70 mit geringster Breite auf.

Zum Verbinden werden die Befestigungselemente 34 leicht versetzt einander angenähert, sodass die Haken 67 durch die Abschnitte 68 der Ausnehmungen 44' eingeführt werden. Durch Verschieben der Befestigungselemente 34 entlang der Längsachse der Seitenfläche, die aneinander anliegen, werden die Haken 67 in die Abschnitte 70 mit geringster Breite geführt, sodass sich die Befestigungselemente 34 nicht mehr voneinander lösen lassen.

In Figur 7 ist eine zweite Ausführungsform des Rahmens 10 dargestellt.

In Unterschied zur ersten Ausführungsform sind die Rahmenteile 112, 114 mehrstückig ausgeführt. Zur Vereinfachung wird nur Rahmenteil 112 beschrieben, da das Rahmenteil 114 zu diesem identisch ist.

Das Rahmenteil 112 weist zwei Endstücke 112.1, 112.2 auf, die miteinander verbunden werden können. Die beiden Endstücke 112.1, 112.2 entsprechen dem Rahmenteil 12 der ersten Ausführungsform, wenn sie direkt miteinander verbunden sind.

In Figur 7 sind die Rahmenteile 112.1, 112.2 jedoch durch ein Verlängerungsstück 72 miteinander verbunden, sodass ein in Richtung des langen Schenkels 18 längerer Rahmen 10 erzeugt werden kann.

Auf diese Weise kann der Rahmen auf einfache Weise vergrößert werden. Auch ist es möglich, den Rahmen 10 durch das Hinzufügen mehrerer Verlängerungsstücke 72 entsprechend der benötigten Baugröße anzupassen.

## Patentansprüche

1. Rahmen für Kabeldurchführungen (60) mit zwei Rahmenteilen (12, 14), einer Aufnahme (32) für Befestigungselemente (34; 34') und zwei Hebelsystemen (20), wobei die Rahmenteile (12, 14) Anlageflächen (30) aufweisen, die die Aufnahme (32) begrenzen, wobei jedes Hebelsystem (20) an einem Ende eines Rahmenteils (12, 14) angeordnet ist und jeweils einen Betätigungshebel (22) und einen Spannhebel (24) aufweist, die miteinander schwenkbar verbunden sind, wobei der Betätigungshebel (22) am Rahmenteil (12, 14) schwenkbar befestigt ist und der Spannhebel (24) in eine Spannfläche (28) des jeweils anderen Rahmenteils (14, 12) eingreifen kann, um die Rahmenteile (12, 14) miteinander lösbar verbinden zu können.

2. Rahmen nach Anspruch 1, **dadurch gekennzeichnet, dass** das Hebelsystem (20) einen Totpunkt aufweist, der beim Verbinden und Lösen der beiden Rahmenteile (12, 14) überwunden werden muss.

3. Rahmen nach Anspruch 1 oder 2, **dadurch gekennzeichnet, dass** jedes der beiden Rahmenteile (12, 14) eines der Hebelsysteme (20) aufweist.

4. Rahmen nach einem der vorhergehenden Ansprüche, **dadurch gekennzeichnet, dass** die Rahmenteile (12, 14) L-förmig ausgeführt sind.

5. Rahmen nach Anspruch 4, **dadurch gekennzeichnet, dass** die Hebelsysteme (20) am kurzen Schenkel (18) des jeweiligen Rahmenteils (12, 14) angeordnet sind.

6. Rahmen nach Anspruch 4 oder 5, **dadurch gekennzeichnet, dass** die Spannflächen (28) am langen Schenkel (16), insbesondere am Ende des langen Schenkels (16), der Rahmenteile (12, 14) vorgesehen sind.

7. Rahmen nach einem der vorhergehenden Ansprüche, **dadurch gekennzeichnet, dass** der Rahmen (10) ein Rechteck bildet, wenn sich der Rahmen (10) in der vollständig geschlossenen Stellung befindet.

8. Rahmen nach einem der vorhergehenden Ansprüche, **dadurch gekennzeichnet, dass** die Rahmenteile (12, 14) mehrstückig ausgeführt sind.

9. Rahmen nach einem der vorhergehenden Ansprüche, **dadurch gekennzeichnet, dass** die Rahmenteile (12, 14) identisch sind.

10. Rahmen nach einem der vorhergehenden Ansprüche, **dadurch gekennzeichnet, dass** der Betätigungshebel (22) eine Öse (25) und das Rahmenteil (12, 14) ein Loch (21) aufweist, wobei die Öse (25) mit dem Loch (21) fluchtet, wenn der Rahmen (10) vollständig geschlossen ist.

11. Rahmen nach einem der vorhergehenden Ansprüche, **dadurch gekennzeichnet, dass** das Hebelsystem (20) derart ausgebildet ist, dass bei Betätigung des Betätigungshebels (22) die beiden Rahmenteile (12, 14) aufeinander zu bewegt werden, wobei die Bewegungsrichtung der Rahmenteile (12, 14) schräg zu den Anlageflächen (30) der Rahmenteile (12, 14) gerichtet ist.

12. Befestigungselement für einen Rahmen (10) für Kabeldurchführungen (60), insbesondere gemäß einem der vorhergehenden Ansprüche, mit Grundflächen (38; 38') und Seitenflächen (40), wobei an wenigstens einer Seitenfläche (40) ein Vorsprung (42; 42') angeordnet ist und an einer nicht notwendigerweise gleichen Seitenfläche (40) eine Ausnehmung (44, 44') vorgesehen ist, in die der Vorsprung (42, 42') eines anderen Befestigungselements (34, 34') eingreifen kann, um die beiden Befestigungselemente (34; 34') aneinander zu befestigen, **dadurch gekennzeichnet, dass** der Querschnitt des Vorsprungs (42) einen Hinterschnitt (50) aufweist, in den der Rand der Ausnehmung (44) eines anderen Befestigungselements (34; 34') eingreifen kann.

13. Befestigungselement nach Anspruch 12, **dadurch gekennzeichnet, dass** der Rand der Ausnehmung (44) und/oder der Vorsprung (42) aus einem elastischen Material sind.

14. Befestigungselement nach Anspruch 12 oder 13, **dadurch gekennzeichnet, dass** der Vorsprung (42') einen Haken (67) aufweist und die Ausnehmung (44') als länglicher Schlitz ausgeführt ist, wobei die Ausnehmung (44') wenigstens zwei Abschnitte (68, 70) mit unterschiedlicher Breite (B_{groß}, Bₖₗₑᵢₙ) aufweist, wobei der Haken (67) im Abschnitt (70) mit kleinster Breite (Bₖₗₑᵢₙ) breiter als die Ausnehmung (44') ist und der Haken (67) im Abschnitt (68) mit größter Breite (B_{groß}) nicht so breit wie die Ausnehmung (44') ist.

15. Befestigungselement nach einem der Ansprüche 12 bis 14, **dadurch gekennzeichnet, dass** an jeder Seitenfläche (40) wenigstens eine Ausnehmung (44; 44') und wenigstens ein Vorsprung (42; 42') vorgesehen sind.

16. Befestigungselement nach einem der Ansprüche 12 bis 15, **dadurch gekennzeichnet, dass** es eine Kabeltülle, ein Stecker, eine Kupplung und/oder ein Adapter, insbesondere ein M12-M8 Adapter, ist.

17. Befestigungselement nach Anspruch 16, **dadurch gekennzeichnet, dass** der Stecker (54) und/oder die Kupplung (56) über ein Mitnahmeprofil (57), insbesondere ein Sechskant, in den Grundflächen (38; 38') aufgenommen ist.

18. Befestigungselement nach einem der Ansprüche 12 bis 17, **dadurch gekennzeichnet, dass** die Größe des Vorsprungs (42; 42') und die der Ausnehmung (44; 44') sowie der Abstand zwischen Vorsprung (42; 42') und Ausnehmung (44; 44') unabhängig von der Größe der Grundfläche (38; 38') gewählt sind, sodass die Befestigungselemente (34, 34') mit verschiedenen Grundflächen (38; 38') aneinander befestigbar sind.

19. Kabeldurchführungssystem mit einem Rahmen (10) gemäß einem der vorhergehenden Ansprüche und mehreren Befestigungselementen (34, 34') gemäß einem der Ansprüche 12 bis 18, die in der Aufnahme (32) des Rahmens (10) angeordnet sind, **dadurch gekennzeichnet, dass** die Anlageflächen (30) Vorsprünge (42; 42') und/oder Ausnehmungen (44; 44') aufweisen, die den Vorsprüngen (42; 42') und Ausnehmungen (44; 44') der Befestigungselemente (34, 34') entsprechen, sodass die Befestigungselemente (34, 34') mit den Rahmenteilen (12, 14) verbindbar sind und bei Betätigung des Hebelsystems (20) im Rahmen (10) fixiert bzw. gelöst werden.

20. Kabeldurchführungssystem nach Anspruch 19, **dadurch gekennzeichnet, dass** die Befestigungselemente (34, 34') einzeln oder zusammen gegenüber dem Rahmen (10) in der Ebene des Rahmens (10) verschiebbar sind, wenn sich der Rahmen (10) in einer halb-geschlossenen Stellung befindet.
